# EUROPÄISCHE PATENTANMELDUNG

(11) **EP 4 538 347 A2**
(43) Veröffentlichungstag der Anmeldung: **16.04.2025**
(21) Anmeldenummer: 25154436.7
(22) Anmeldetag: 25.10.2019
(51) Int. Cl.: C09K 5/20

(54) **VERWENDUNG EINER IM WESENTLICHEN WASSERFREIEN ZUSAMMENSETZUNG ALS KÜHLMITTEL UND GEFRIERSCHUTZMITTEL FÜR BRENNSTOFFZELLEN, AKKUMULATOREN UND BATTERIEN**

(30) Priorität: 06.11.2018 EP 18204600; 12.02.2019 EP 19156713; 12.02.2019 EP 19156712
(62) Teilanmeldung aus: 19794149.5
(71) Anmelder: BASF SE, 67056 Ludwigshafen am Rhein (DE)
(72) Erfinder: Dietl, Harald, 67056 Ludwigshafen am Rhein (DE); Aydin, Bayram, 67056 Ludwigshafen am Rhein (DE); Sieg, Roger, 67056 Ludwigshafen am Rhein (DE)
(74) Vertreter: BASF IP Association

(57) **Zusammenfassung**

Die vorliegende Erfindung betrifft neue, im wesentlichen wasserfreie Gefrierschutzmittel für Kühlsysteme, die als solche, also ohne weitere Verdünnung mit Wasser, als Kühl- und Gefrierschutzmittel eingesetzt werden können.

## Beschreibung

Die vorliegende Erfindung betrifft neue, im wesentlichen wasserfreie Gefrierschutzmittel für Kühlsysteme, die als solche, also ohne weitere Verdünnung mit Wasser, als Kühl- und Gefrierschutzmittel eingesetzt werden können und deren Verwendung in Kühlsystemen in Elektrofahrzeugen mit Brennstoffzellen und/oder Batterien, und/oder in Hybridfahrzeugen aus Elektrofahrzeugen mit Brennstoffzellen und/oder Batterien mit Verbrennungsmotoren, bevorzugt in Kraftfahrzeugen, besonders bevorzugt in Personen- und Nutzfahrzeugen (sogenannte light und heavy duty Fahrzeuge).

Brennstoffzellen und/oder Batterien für den mobilen Einsatz, besonders in Kraftfahrzeugen, müssen auch bei niedrigen Außentemperaturen von bis zu etwa minus 40°C betrieben werden können. Ein frostgeschützter Kühlmittelkreislauf ist deshalb unerlässlich.

Ferner werden bei einer Schnellladung von Batterien Temperaturen bis über 100 °C erreicht, so daß die Wärme abgeführt werden muß, um das jeweilige Bauteil nicht zu schädigen.

Die Verwendung von bei Verbrennungsmotoren eingesetzten herkömmlichen Kühlerschutzmitteln auf Basis von Monoalkylenglykolen optional in Kombination mit Glycerin wäre bei Brennstoffzellen und/oder Batterien ohne eine vollständige elektrische Isolierung der Kühlkanäle nicht möglich, da diese Mittel wegen der darin als Korrosionsinhibitoren enthaltenen Salze und ionisierbaren Verbindungen eine zu hohe elektrische Leitfähigkeit haben, was die Funktion der Brennstoffzelle oder Batterie negativ beeinträchtigen würde. Ferner droht beispielsweise im Falle eines Unfalls mit Auslaufen der Batterie bei Kurzschließen von Anode und Kathode mit der Kühlflüssigkeit ein Kurzschluß und/oder die Entwicklung von Wasserstoffgas durch Elektrolyse, was zusätzliches Gefährdungspotential mit sich bringt.

Für diesen Zweck sind Wasser- und Ethylenglykol-haltige Kühlmittel mit einer niedrigen Leitfähigkeit bekannt (siehe z.B. US 2015/266370).

WO 95/07323 offenbart wasserfreie Kühlmittel mit einem Wassergehalt unter 0,5 Gew% auf Basis Propylenglykol und optional Ethylengykol, jedoch lediglich für Verbrennungsmotoren. Eine Verwendung zur Kühlung elektrischer Baukomponenten wird nicht nahegelegt.

Ferner ist es erforderlich, daß die Kühlerschutzmittel über einen langen Zeitraum ihre anfänglich meist niedrige elektrische Leitfähigkeit beibehalten und nicht durch verschiedene Zersetzungsprozesse, meist unter Bildung von Ionen, in ihrer Leitfähigkeit ansteigen.

Aus EP 1399523 sind Kühlmittel für Brennstoffzellen auf Basis Wasser/Monoethylenglykol bekannt, die als Inhibitoren Azolderivate, sowie optional ortho Kieselsäureester enthalten.

Durch Wasser als wesentlichem Bestandteil in herkömmlichen Kühlerschutzflüssigkeiten ist die Einsatztemperatur dieser Kühlerschutzflüssigkeiten auf die Siedetemperatur von Wasser in den jeweiligen Mischungen bei Betriebsdruck begrenzt. So sieden Mischungen aus Wasser und Monoethylenglykol als typischer herkömmlicher Kühlerschutzflüssigkeit in der Regel bei etwa 110 bis 120 °C bei normalem Druck.

Im Stand der Technik werden verbreitet wasserfreie Kühlmittelkonzentrate beschrieben, z.B. in US 8394287, bei denen eine Kühlerschutzkomponente, meist Monoethylenglykol, mit verschiedenen Additiven, beispielsweise Korrosionsinhibitoren, Antioxidantien, Anti-Schaummittel, Bitterstoffe und Farbstoffe, gemischt werden. US 8394287 beschreibt zusätzlich noch die Anwesenheit von mindestens einer weiteren Kühlerschutzkomponente, beispielsweise Monopropylenglykol, höhere Ethylenglykolhomologe oder Glycerin, zu dem Konzentrat.

Zweck dieser Kühlmittelkonzentrate ist immer die spätere Verdünnung mit Wasser für die Verwendung als Kühlmittel (meist mit einem Wassergehalt von 30 bis 70 Vol%), der Einsatz der unverdünnten Konzentrate als Kühlmittel ist nicht vorgesehen.

Beschrieben werden oftmals auch sogenannte Superkonzentrate, bei denen es sich im wesentlichen um hochkonzentrierte Formulierungen der obigen Additive in relativ wenig Kühlerschutzkomponente, meist Monoethylenglykol oder auch Monopropylenglykol, handelt.

Zweck dieser Superkonzentrate ist immer die spätere Verdünnung mit einer Kühlerschutzkomponente zur Herstellung des Kühlmittelkonzentrats und daraus dann die Herstellung des eigentlichen Kühlmittels. Der Einsatz der unverdünnten Superkonzentrate als Kühlmittel ist nicht vorgesehen.

Monoethylenglykol siedet bei Normaldruck bei 197 °C, so daß Monoethylenglykol-haltige Zusammensetzungen bei Temperaturen ab ca. 170 °C einen signifikanten Dampfdruck aufweisen, was deren Verwendung als Wärmeträgerflüssigkeiten bei hohen Temperaturen beschränkt. Analoges gilt für Monoethylenglykol monomethylether (Siedepunkt bei Normaldruck 124 °C) und Monopropylenglykol (Siedepunkt bei Normaldruck 188 °C).

Glycerin als Bestandteil von Kühlerschutzflüssigkeiten hat zwar einen relativ hohen Siedepunkt von ca. 290 °C, bei dem es sich jedoch zersetzt. Somit neigt Glycerin bei hohen Temperaturen zu Zersetzungsreaktionen und ist damit unter derartigen Bedingungen als Wärmeträgerflüssigkeit weniger geeignet.

Somit sind Wasser und die häufig in Kühlerschutzflüssigkeiten eingesetzten niederen Alkylenglykole, besonders Monoalkylenglykole, und deren Ether sowie Glycerin zum Einsatz als Wärmeträgerflüssigkeit bei hohen Temperaturen mit starken Nachteilen behaftet.

Soll bei einer höheren Temperatur Wärme übertragen werden, so muß entweder das Kühlsystem auf höhere Drucke ausgelegt werden oder auf Öle, beispielsweise Mineralöle, synthetische Öle oder Fettsäureester, oder fluorierte Kohlenwasserstoffe als Kühlmittel ausgewichen werden. Ersteres ist technisch aufwendig, so daß Kühlsysteme üblicherweise offen gegen die Umgebung gestaltet werden. Letztere haben u.a. die Nachteile, daß sie eine geringe Wärmekapazität aufweisen und durch die offene Gestaltung der Kühlsysteme bei Eindringen von Wasser durch ihre geringe Wasserverträglichkeit zwei Phasen ausbilden.

Es bestand daher die Aufgabe, Kühlmittel für den Einsatz in Batterien oder Brennstoffzellen in Elektrofahrzeugen und/oder in Hybridfahrzeugen aus Elektrofahrzeugen mit Brennstoffzellen und/oder Batterien mit Verbrennungsmotoren zu entwickeln, die bei höheren Temperaturen einsetzbar sind und dabei eine hohe Wärmekapazität aufweisen, gleichzeitig aber für den Einsatz in offenen Kühlsystemen geeignet sind und eine Wasserverträglichkeit zeigen.

Ferner sollten sie darüberhinaus eine geringe Leitfähigkeit aufweisen und diese auch im Betrieb beibehalten, was besonders eine geringe Korrosion erfordert, da eine Korrosion einen Ioneneintrag in das Kühlmittel bedeutet, was die elektrische Leitfähigkeit erhöhen würde.

Die Aufgabe wurde gelöst durch gebrauchsfertige Gefrierschutzmittel für Kühlsysteme, enthaltend
(A) mindestens ein Alkylenglykolderivat der Formel (I) 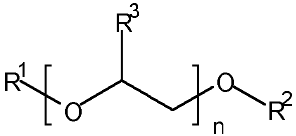 worin
   R¹ Wasserstoff oder C₁- bis C₄-Alkyl, bevorzugt Wasserstoff, Methyl oder Ethyl, besonders bevorzugt Wasserstoff oder Methyl und ganz besonders bevorzugt Wasserstoff,
   R² C₁- bis C₄-Alkyl, bevorzugt Methyl, Ethyl oder n-Butyl, besonders bevorzugt Methyl oder n-Butyl und ganz besonders bevorzugt Methyl
   R³ Wasserstoff oder Methyl, bevorzugt Wasserstoff und
   n im arithmetischen Mittel eine Zahl von 3,0 bis 4,0
   bedeuten,
      und
(B) mindestens einen Korrosionsinhibitor, ausgewählt aus der Gruppe bestehend aus
   (Ba) ortho-Kieselsäureestern und/oder Alkoxyalkylsilanen
   (Bb) Azolderivaten
   (Bc) Verbindungen der allgemeinen Formel (II) 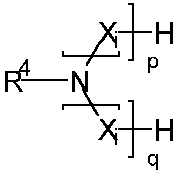
   worin
   R⁴ einen organischen Rest mit 6 bis 10 Kohlenstoffatomen, insbesondere einen geradkettigen oder verzweigten, bevorzugt geradkettigen Alkyl- oder Alkenylrest mit 6 bis 10 Kohlenstoffatomen, bevorzugt 7 bis 9 und besonders bevorzugt 8 Kohlenstoffatomen,
   p und q unabhängig voneinander eine positive ganze Zahl von 1 bis 30, bevorzugt 1 bis 20, besonders bevorzugt 1 bis 10, ganz besonders bevorzugt 1 bis 5 und insbesondere 1 bis 3, speziell 1 oder 2 und
   jedes Xᵢ für i = 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
   bedeuten,
   mit der Maßgabe, daß die Zusammensetzung
      - weniger als 1 Gew% Wasser enthält, bevorzugt weniger als 0,75, besonders bevorzugt weniger als 0,5, ganz besonders bevorzugt weniger als 0,4, insbesondere weniger als 0,3 und speziell weniger als 0,2 Gew%,
      - einen Anteil an Alkylenglykolderivaten der Formel (I) mit n ≤ 2 von nicht mehr als 10 Gew% enthält, bevorzugt nicht mehr als 8, besonders bevorzugt nicht mehr als 6, ganz besonders bevorzugt nicht mehr als 5, insbesondere nicht mehr als 4 und speziell nicht mehr als 3 Gew%,
      - einen Anteil an Alkylenglykolderivaten der Formel (I) mit n ≥ 5 von nicht mehr als 5 Gew% enthält, bevorzugt nicht mehr als 4, besonders bevorzugt nicht mehr als 3, ganz besonders bevorzugt nicht mehr als 2,5 und speziell nicht mehr als 2 Gew%,
      - einen Anteil an Monoethylenglykol, Diethylenglykol, Monopropylenglykol, Dipropylenglykol, 1,3-Propylenglykol und Glycerin von jeweils nicht mehr als 10 Gew% enthält, bevorzugt nicht mehr als 8, besonders bevorzugt nicht mehr als 6, ganz besonders bevorzugt nicht mehr als 5 und speziell nicht mehr als 3 Gew%.

Die einzelnen Komponenten seien im folgenden näher beschrieben:

### Komponente (A)

In dem mindestens einen Alkylenglykolderivat der Formel (I) 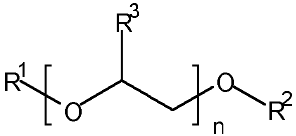 bedeuten
R¹ Wasserstoff oder C₁- bis C₄-Alkyl, bevorzugt Wasserstoff, Methyl oder Ethyl, besonders bevorzugt Wasserstoff oder Methyl und ganz besonders bevorzugt Wasserstoff,
R² C₁- bis C₄-Alkyl, bevorzugt Methyl, Ethyl oder n-Butyl, besonders bevorzugt Methyl oder n-Butyl und ganz besonders bevorzugt Methyl
R³ Wasserstoff oder Methyl, bevorzugt Wasserstoff und
n im arithmetischen Mittel eine Zahl von 3,0 bis 4,0.
Bevorzugte Alkylenglykolderivate (A) sind
Triethylenglykol monomethylether
Triethylenglykol monoethylether
Triethylenglykol mono-n-butylether
Triethylenglykol dimethylether
Triethylenglykol diethylether
Triethylenglykol di-n-butylether
Tetraethylenglykol monomethylether
Tetraethylenglykol monoethylether
Tetraethylenglykol mono-n-butylether
Tetraethylenglykol dimethylether
Tetraethylenglykol diethylether
Tetraethylenglykol di-n-butylether
Tripropylenglykol monomethylether
Tripropylenglykol monoethylether
Tripropylenglykol mono-n-butylether
Tripropylenglykol dimethylether
Tripropylenglykol diethylether
Tripropylenglykol di-n-butylether
Tetrapropylenglykol monomethylether
Tetrapropylenglykol monoethylether
Tetrapropylenglykol mono-n-butylether
Tetrapropylenglykol dimethylether
Tetrapropylenglykol diethylether
Tetrapropylenglykol di-n-butylether

Dabei sind die Ethylenglykolether gegenüber den Propylenglykolethern bevorzugt.

Ferner sind die Monoalkylether gegenüber den Dialkylethern bevorzugt.

Bevorzugt handelt es sich bei der Komponente (A) um im wesentlichen reine Verbindung der Formel (I) mit n = 3 oder um eine Mischung von Verbindungen der Formel (I) mit n = 3 und n = 4. Im arithmetischen Mittel beträgt n für die Verbindungen der Formel (I) im Gemisch bevorzugt von 3,0 bis 3,6, besonders bevorzugt von 3,0 bis 3,5, ganz besonders bevorzugt von 3,05 bis 3,4, insbesondere von 3,1 bis 3,3 und speziell von 3,15 bis 3,25.

Dabei können die Reste R¹ und R² für die Verbindungen im Gemisch gleich oder verschieden sein, bevorzugt sind sie gleich.

Mit "im wesentlichen rein" ist dabei bezeichnet, daß Verbindungen der Formel (I) mit n = 3 bzw. n = 4 zu einem bestimmten Anteil auch die homologen Verbindungen mit höheren und niedrigeren Werten für n enthalten sind.

In der Regel beträgt der Reinheitsgrad bei Verbindungen der Formel (I) mit n = 3 mindestens 80 Gew%, bevorzugt mindestens 85 Gew%, ganz besonders bevorzugt mindestens 90 Gew%, insbesondere mindestens 95 Gew% und speziell mindestens 97,5 Gew%. Der Rest sind überwiegend Verbindungen der Formel (I) mit n = 2 und n = 4.

Bei Verbindungen der Formel (I) mit n = 4 ist hingegen der Reinheitsgrad zumeist nur über 50 Gew%, bevorzugt mindestens 55, besonders bevorzugt mindestens 60 Gew%. Der Rest sind überwiegend Verbindungen der Formel (I) mit n = 3 und in geringerem Ausmaß n = 5.
Bevorzugte Komponenten (A) mit im wesentlichen reinen Verbindungen sind
Triethylenglykol monomethylether
Triethylenglykol monoethylether
Triethylenglykol mono-n-butylether

Bevorzugte Komponenten (A) mit Mischungen von Verbindungen der Formel (I) mit n = 3 und n = 4 sind
Triethylenglykol monomethylether im Gemisch mit Tetraethylenglykol monomethylether Triethylenglykol monoethylether im Gemisch mit Tetraethylenglykol monoethylether Triethylenglykol mono-n-butylether im Gemisch mit Tetraethylenglykol mono-n-butylether

Denkbar, wenn auch weniger bevorzugt, sind solche Mischungen von Verbindungen der Formel (I) mit n = 3 und n = 4, die unterschiedliche Reste R¹ aufweisen.

Derartige Mischungen sind
Triethylenglykol monomethylether im Gemisch mit Tetraethylenglykol monoethylether Triethylenglykol monomethylether im Gemisch mit Tetraethylenglykol mono-n-butylether Triethylenglykol monoethylether im Gemisch mit Tetraethylenglykol monomethylether Triethylenglykol monoethylether im Gemisch mit Tetraethylenglykol mono-n-butylether Triethylenglykol mono-n-butylether im Gemisch mit Tetraethylenglykol monomethylether Triethylenglykol mono-n-butylether im Gemisch mit Tetraethylenglykol monoethylether

Denkbar, wenn auch weniger bevorzugt, sind gemischte Alkylenglykolderivate der Formel (I), bei denen R³ für jedes n unabhängig voneinander gleich oder verschieden sein kann, d.h. also Tri- und Tetraalkylenglykolderivate der Formel (I) aus Mischungen von Ethylenoxid und Propylenoxid.

Bei Gemischen von Verbindungen der Formel (I) mit n = 3 und n = 4 beträgt das Gewichtsverhältnis bevorzugt von 100 : 0 bis 40 : 60, besonders bevorzugt 95 : 5 bis 50 : 50, ganz besonders bevorzugt 90 : 10 bis 60 : 40, insbesondere von 85 : 15 bis 70 : 30 und speziell 85 : 15 bis 75 : 25.

### Komponente (B)

Bei der Komponente (B) handelt es sich um mindestens einen Korrosionsinhibitor ausgewählt aus der Gruppe bestehend aus aus der Gruppe bestehend aus
(Ba) ortho-Kieselsäureestern und/oder Alkoxyalkylsilanen
(Bb) Azolderivaten und
(Bc) Verbindungen der allgemeinen Formel (II)

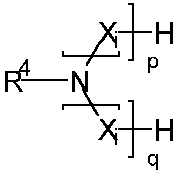

Bei den ortho-Kieselsäureestern (Ba) handelt es sich um Verbindungen der Formel Si(OR⁵)₄
worin
R⁵ jeweils einen organischen Rest mit 1 bis 6 Kohlenstoffatomen, bevorzugt einen geradkettigen oder verzweigten, bevorzugt geradkettigen Alkylrest mit 1 bis 6 Kohlenstoffatomen oder einen Arylrest mit 6 Kohlenstoffatomen, besonders bevorzugt einen Alkylrest mit 1 bis 4 Kohlenstoffatomen, ganz besonders bevorzugt einen Alkylrest mit 1 oder 2 Kohlenstoffatomen bedeuten.

### Beispiele dafür sind

ortho-Kieselsäure tetramethylester
ortho-Kieselsäure tetraethylester
ortho-Kieselsäure tetra-n-butylester
ortho-Kieselsäure tetraphenylester
Bevorzugt sind
ortho-Kieselsäure tetramethylester
ortho-Kieselsäure tetraethylester
Besonders bevorzugt ist
ortho-Kieselsäure tetraethylester.

Bei den gegenüber den ortho-Kieselsäureestern weniger bevorzugten Alkoxyalkylsilanen handelt es sich bevorzugt um Triethoxymethylsilan, Diethoxydimethylsilan, Ethoxytrimethylsilan, Trimethoxymethylsilan, Dimethoxydimethylsilan und Methoxytrimethylsilan.

Unter Azolderivaten (Bb) werden im Rahmen dieser Schrift fünfgliedrige heterocyclische Verbindungen mit 2 oder 3 Heteroatomen aus der Gruppe Stickstoff und Schwefel, welche kein oder maximal ein Schwefelatom in den Ring eingebaut enthalten und welche optional einen aromatischen oder gesättigten sechsgliedrigen Anellanten tragen können.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel 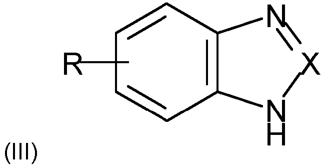 oder

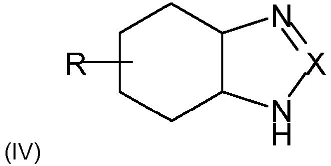

in denen die Variable
R Wasserstoff oder einen C₁- bis C₁₀-Alkylrest, insbesondere Methyl oder Ethyl, bedeutet und die Variable X ein Stickstoffatom oder die Gruppierung C-H bezeichnet.

Typische und bevorzugte Beispiele für Azolderivate der allgemeinen Formel (III) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (IV) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (V) 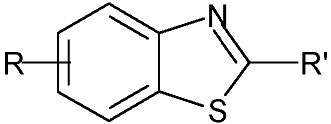 in der
die Variable R die oben genannte Bedeutung hat und
die Variable R' Wasserstoff, einen C₁- bis C₁₀-Alkylrest, insbesondere Methyl oder Ethyl, oder insbesondere eine Mercaptogruppe (-SH) bezeichnet. Denkbar, wenn auch weniger bevorzugt kann R' auch ein Carboxyalkylrest der Formel -(CₘH₂ₘ)-COOR" sein, wobei m für eine Zahl von 1 bis 4 steht und R" C₁- bis C₁₀-Alkyl, insbesondere Methyl oder Ethyl, oder C₆- bis C₁₂-Aryl bedeutet. Beispiele dafür sind (2-Benzothiazylthio)-essigsäure ester oder 3-(2-Benzothiazylthio)-propionsäure ester. Ein typisches Beispiel für ein Azolderivat der allgemeinen Formel (V) ist 2-Mercaptobenzthiazol.

Weiterhin werden nicht-anellierte Azolderivate der allgemeinen Formel (VI) 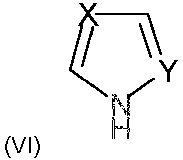 in der die Variablen
X und Y zusammen zwei Stickstoffatome oder
ein Stickstoffatom und eine Gruppierung C-H bezeichnen,
beispielsweise 1H-1,2,4-Triazol (X = Y = N) oder bevorzugt Imidazol (X = N, Y = C-H).

Ganz besonders bevorzugt werden für die vorliegende Erfindung als Azolderivate Benzimidazol, Benzotriazol, Tolutriazol, hydriertes Tolutriazol oder Mischungen hieraus, insbesondere Benzotriazol oder Tolutriazol, speziell Tolutriazol.

Die genannten Azolderivate sind kommerziell verfügbar oder nach gängigen Methoden herstellbar. Hydrierte Benzotriazole wie hydriertes Tolutriazol sind ebenfalls gemäß DE-A 1 948 794 zugänglich und auch kommerziell verfügbar.

In der allgemeinen Formel (II) der Komponente (Bc) sind
R⁴ einen organischen Rest mit 6 bis 10 Kohlenstoffatomen, insbesondere einen geradkettigen oder verzweigten, bevorzugt geradkettigen Alkyl- oder Alkenylrest mit 6 bis 10 Kohlenstoffatomen, bevorzugt 7 bis 9 und besonders bevorzugt 8 Kohlenstoffatomen,
p und q unabhängig voneinander eine positive ganze Zahl von 1 bis 30, bevorzugt 1 bis 20, besonders bevorzugt 1 bis 10, ganz besonders bevorzugt 1 bis 5, insbesondere 1 bis 3, speziell 1 oder 2
   und
jedes Xᵢ für i = 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-.

In den Verbindungen der Formel (II) ist das Strukturelement R⁴-N< bevorzugt abgeleitet von Fettaminen, die bevorzugt durch Hydrierung und Aminierung von Fettsäuren und Estern erhältlich sind, besonders bevorzugt durch Hydrierung und Aminierung der oben genannten Fettsäuren oder Aminierung von Fettalkoholen.

Als Reste R⁴ sind Alkylreste den Alkenylresten gegenüber bevorzugt.

In einer speziellen Ausführungsform sind p und q unabhängig voneinander 1, 2 oder 3, besonders bevorzugt 1 oder 2 und ganz besonders bevorzugt 1.

In einer bevorzugten Ausführungsform handelt es sich bei den Fettaminen um n-Hexylamin, 2-Methylpentylamin, n-Heptylamin, 2-Heptylamin, iso-Heptylamin, 1-Methylhexylamin, n-Octylamin, 2-Ethylhexylamin, 2-Aminooctan, 6-Methyl-2-heptylamin, n-Nonylamin, iso-Nonylamin, n-Decylamin und 2-Propylheptylamin oder deren Gemische.

Besonders bevorzugt sind n-Hexylamin, n-Octylamin, 2-Ethylhexylamin und n-Decylamin, ganz besonders bevorzugt sind n-Octylamin und 2-Ethylhexylamin und insbesondere n-Octylamin.

Insbesondere zu nennen ist zweifach, dreifach, vierfach, fünffach und sechsfach ethoxyliertes n-Octylamin, sowie Mischungen daraus, und zweifach, dreifach, vierfach, fünffach und sechsfach ethoxyliertes n-Hexylamin, sowie Mischungen daraus.

Bei den alkoxylierten Aminen der allgemeinen Formel (II) bezieht sich der Alkoxylierungsgrad auf die Summe (p + q), also auf die durchschnittliche Gesamtzahl der Alkoxylierungseinheiten pro Molekül Amin.

Die Verbindungen (II) sind bevorzugt erhältlich, indem man die korrespondierenden Amine R⁴-NH₂ mit Alkylenoxiden bis zu dem gewünschten mittleren statistischen Alkoxylierungsgrad umsetzt, bevorzugt unter basischen Bedingungen. Dies ist dann besonders bevorzugt, wenn die Struktureinheit Xᵢ abgeleitet ist von Ethylenoxid oder Propylenoxid, bevorzugt von Ethylenoxid.

Die erfindungsgemäßen Zusammensetzungen enthalten in der Regel
Komponente (A): 95 bis 99,9 Gew%, bevorzugt 96 bis 99,8, besonders bevorzugt 97 bis 99,5, ganz besonders bevorzugt 97,5 bis 99 Gew% und insbesondere 98 bis 99 Gew%. Komponente (B): 0,1 bis 5 Gew%, bevorzugt 0,2 bis 4, besonders bevorzugt 0,5 bis 3, ganz besonders bevorzugt 1 bis 2,5 Gew% und speziell 1 bis 2 Gew%.

### Komponente (C) - weitere optionale Korrosionsinhibitoren

Neben mindestens einer der obigen Komponenten (B) als obligatorischem Korrosionsinhibitor kann die erfindungsgemäße Zusammensetzung optional noch mindestens einen weiteren Korrosionsinhibitor enthalten, der ein anderer als die unter (B) aufgeführten ist.

Es stellt jedoch eine bevorzugte Ausführungsform der vorliegenden Erfindung dar, daß außer den oben genannten Komponenten (B) keine weiteren Korrosionsinhibitoren (C) in der Zusammensetzung enthalten sind.

Beispiele für die Komponenten (C) sind aliphatische, cycloaliphatische oder aromatische Amine mit 2 bis 15 Kohlenstoffatomen, die zusätzlich Ethersauerstoffatome oder Hydroxylgruppen enthalten können und die verschieden von den Verbindungen (Bc) der Formel (II) sind.

Die Amine (C) weisen vorzugsweise 2 bis 9, insbesondere 4 bis 8 Kohlenstoffatome auf. Die Amine (C) sind vorzugsweise tertiäre Amine. Die Amine (C) enthalten vorzugsweise 0 bis 3 Ethersauerstoffatome oder 0 bis 3, bevorzugt 0 bis 2 Hydroxylgruppen. Typische Beispiele für die Amine (C) sind Ethylamin, Propylamin, iso-Propylamin, n-Butylamin, iso-Butylamin, sec.-Butylamin, tert.-Butylamin, n-Pentylamin, n-Hexylamin, n-Heptylamin, n-Octylamin, 2-Ethylhexylamin, n-Nonylamin, iso-Nonylamin, Di-n-propylamin, Diiso-propylamin, Di-n-butylamin, Mono-, Di- und Triethanolamin, Mono-, Di- und Triisopropanolamin, Piperidin, Morpholin, Cyclohexylamin, Anilin und Benzylamin. Aliphatische und cycloaliphatische Amine (C) sind in der Regel gesättigt.

Weiterhin ist der Einsatz von Fettsäurealkoxylaten und Fettalkoholalkoxylaten als weitere Korrosionsinhibitor denkbar, wie Sie beschrieben sind in der WO 18/95759 als Verbindungen der Formel (V) und (VI) von Seite 5, Zeile 34 bis Seite 10, Zeile 10 beschrieben sind, worauf hiermit Bezug genommen sei.

Die Komponente (C) ist optional und kann in den erfindungsgemäßen Zusammensetzungen in Mengen von 0 bis 2 Gew%, bevorzugt 0 bis 1,5 Gew%, besonders bevorzugt 0 bis 1 Gew%, ganz besonders bevorzugt 0 bis 0,7 Gew% anwesend sein.

In einer ausdrücklich bevorzugten Ausführungsform ist keine Komponente (C) anwesend.

### Komponente (D) - weitere Additive

Die erfindungsgemäße Zusammensetzung kann optional noch mindestens ein weiteres Additiv enthalten, ausgewählt aus der Gruppe bestehend aus
(Da) Bitterstoffen
(Db) Farbstoffen
(Dc) Entschäumer
(Dd) Antioxidantien und
(De) Emulgatoren.

Bitterstoffe (Da) können aus Gründen der Hygiene und der Sicherheit im Falle eines Verschluckens zugegeben werden, zum Beispiel Bitterstoffe vom Typ Denatoniumbenzoat. Bei den Zusammensetzungen gemäß der vorliegenden Anmeldung sind Bitterstoffe optional. Bevorzugt ist in der erfindungsgemäßen Zusammensetzung kein Bitterstoff anwesend.

Bei diesen Stoffen handelt es sich um handels- und anwendungsübliche Verbindungen aus dem Stand der Technik, die typischerweise in Kühlmitteln eingesetzt werden können.

Eine Funktion der eingesetzten Emulgatoren (De) in den erfindungsgemäßen Zusammensetzungen ist, daß sie aus dem Kühlsystem stammende potentielle Verunreinigungen und/oder Montageflüssigkeiten (assembly fluids), z.B. Polyalkylenglykole oder Oligomere des Glycerin, in den Zusammensetzungen emulgieren können.

Die Komponenten (D) sind jeweils optional und können in den erfindungsgemäßen Zusammensetzungen jeweils unabhängig voneinander in Mengen von 0 bis 0,5 Gew%, bevorzugt 0,001 bis 0,3 Gew% und besonders bevorzugt 0,002 bis 0,2 Gew% anwesend sein.

### Eigenschaften der erfindungsgemäßen Zusammensetzungen

Die erfindungsgemäßen Zusammensetzungen unterliegen folgenden Maßgaben:
Sie enthalten weniger als 1 Gew% Wasser, bevorzugt weniger als 0,75, besonders bevorzugt weniger als 0,5, ganz besonders bevorzugt weniger als 0,4, insbesondere weniger als 0,3 und speziell weniger als 0,2 Gew%.

Der erfindungsgemäß geringe Wassergehalt bewirkt zusammen mit der Wahl der Komponente (A) den erfindungsgemäß erhöhten Siedepunkt, da ein höherer Wassergehalt den Siedepunkt einer Zusammensetzung auf etwa 100 °C zuzüglich einer etwaigen Siedepunktserhöhung begrenzt. Die Anwesenheit bereits geringer Mengen Wasser senkt den Siedepunkt der Zusammensetzungen drastisch, dieser Effekt ist beispielsweise bekannt von Bremsflüssigkeiten und führt zu unterschiedlichen Anforderungen an die Siedepunkte in Abhängigkeit vom Wassergehalt.

Ferner kann bei einer Verwendung der Zusammensetzung als Kühlmittel für Kühlsysteme in Brennstoffzellen, Akkumulatoren und/oder Batterien Wasser bei einer signifikanten elektrischen Leitfähigkeit zu einer Elektrolyse der Zusammensetzung und unerwünschten Wasserstoffentwicklung führen, die ein erhöhtes Unfallrisiko birgt.

Eine weitere Maßgabe der erfindungsgemäßen Zusammensetzungen ist, daß sie einen Anteil an Alkylenglykolderivaten der Formel (I) mit n ≤ 2 von nicht mehr als 10 Gew% enthalten, bevorzugt nicht mehr als 8, besonders bevorzugt nicht mehr als 6, ganz besonders bevorzugt nicht mehr als 5, insbesondere nicht mehr als 4 und speziell nicht mehr als 3 Gew%.

Ein höherer Gehalt an Alkylenglykolderivaten der Formel (I) mit n ≤ 2 würde einerseits ebenfalls den Siedepunkt ungewünscht absenken und andererseits die Viskosität der Zusammensetzung zu stark verringern. Eine zu geringe Viskosität kann in bestimmten Anwendungen unerwünscht sein, da niedrigviskose Flüssigkeiten Dichtungen leicht überwinden und somit Leckagen verursachen.

Eine weitere Maßgabe der erfindungsgemäßen Zusammensetzungen ist, daß sie einen Anteil an Alkylenglykolderivaten der Formel (I) mit n ≥ 5 von nicht mehr als 5 Gew% enthalten, bevorzugt nicht mehr als 4, besonders bevorzugt nicht mehr als 3, ganz besonders bevorzugt nicht mehr als 2,5 und speziell nicht mehr als 2 Gew%.

Hier gilt umgekehrt, daß höhere Homologe eine hohe Viskosität der Zusammensetzung bewirken und somit die Pumpbarkeit der Zusammensetzung erschweren. Eine hohe Viskosität erfordert eine erhöhte Pumpleistung und somit einen erhöhten Energieverbrauch der Pumpen. Weiterhin haben die höheren Homologe zusätzlich einen erhöhten Schmelzpunkt, so daß bei niedrigen Temperaturen die Gefahr besteht, daß diese aus der Zusammensetzung ausfallen.

Eine weitere Maßgabe der erfindungsgemäßen Zusammensetzungen ist, daß sie einen Anteil an Monoethylenglykol, Diethylenglykol, Monopropylenglykol, Dipropylenglykol, 1,3-Propylenglykol und Glycerin von jeweils nicht mehr als 10 Gew% enthalten, bevorzugt nicht mehr als 8, besonders bevorzugt nicht mehr als 6, ganz besonders bevorzugt nicht mehr als 5 und speziell nicht mehr als 3 Gew%.

Neben dem oben erwähnten niedrigen Siedepunkt der niederen Homologe sind mehrwertige Alkohole relativ instabil gegen thermische Belastung und Oxidation. Ein geringer Anteil der genannten Verbindungen erhöht damit die Stabilität der erfindungsgemäßen Zusammensetzungen.

Die erfindungsgemäßen Zusammensetzungen weisen bevorzugt eine spezifische Wärmekapazität bei 50 °C von mindestens 2,0 kJ/kg×K auf, besonders bevorzugt von mindestens 2,1, ganz besonders bevorzugt mindestens 2,2 und insbesondere von mindestens 2,3 kJ/kg×K.

Die erfindungsgemäßen Zusammensetzungen weisen bevorzugt eine Wärmeleitfähigkeit von mindestens 0,15 W/m×K auf.

Um eine niedrige Leitfähigkeit zu erhalten, werden als Komponenten (A) bevorzugt Verbindungen mit einer Polarisierbarkeit von nicht mehr als 50 C × m²/V eingesetzt, besonders bevorzugt nicht mehr als 45, ganz besonders bevorzugt nicht mehr als 40, insbesondere nicht mehr als 35 und speziell nicht mehr als 30.

### Verwendung

Es stellt einen Vorteil der beschriebenen Zusammensetzungen dar, daß sie allgemein als Kühlmittel für Kühlsysteme einsetzbar sind, besonders als Kühlsysteme in Brennstoffzellen, Akkumulatoren und/oder Batterien. Diese Kühlmittel zeigen weiterhin eine Gefrierschutzwirkung.

Für die letztere Verwendung ist es entscheidend, daß die Zusammensetzungen eine elektrische Leitfähigkeit bei 25 °C von maximal 50 µS/cm aufweisen, bevorzugt nicht mehr als 25, besonders bevorzugt nicht mehr als 15, ganz besonders bevorzugt nicht mehr als 10 und insbesondere nicht mehr als 5 µS/cm.

Eine niedrige elektrische Leitfähigkeit in Kühlsystemen in Brennstoffzellen, Akkumulatoren und Batterien ist essentiell, da ansonsten die einzelnen Zellen im Betrieb, bei Entladung oder beim Laden kurzgeschlossen werden können.

Durch eine Beschädigung der Batteriezelle besteht die Gefahr, daß Kühlmittel und Elektrolyt in Kontakt geraten und sich durch Reaktion des protischen Kühlmittels mit dem häufig eingesetzten Elektrolyt LiPF₆ gefährlicher Fluorwasserstoff und andere Reaktionsprodukte bilden. Diese Gefahr wird weiter erhöht durch die Anwesenheit von Wasser, beispielsweise durch die hygroskopische Eigenschaft der Kühlmittel (siehe unten). So ist beispielsweise aus A. V. Plakhotnyk et al., Journal of Fluorine Chemistry, 126 (2005) 27 - 31 bekannt, daß von LiPF₆ gelöst in aprotischen organischen Lösungsmitteln bereits bei einem Wassergehalt von 0,5 Gew% über etwa 23 Tage in Summe ca. 10 mol% des eingesetzten LiPF₆ hydrolysiert.

Bei Kontakt der erfindungsgemäßen Zusammensetzungen mit LiPF₆ wird überraschenderweise keine wesentliche Reaktion beobachtet, sogar in Anwesenheit von Wasser. Daher sind die erfindungsgemäßen Zusammensetzungen in besonderer Weise geeignet für die Kühlung von Lithiumionen-Akkumulatoren.

Dem allgemeinen Sprachgebrauch folgend werden die Begriffe "Batterie" und "Akkumulator" hier so verwendet, daß Akkumulatoren wiederaufladbare, einzelne oder zusammengeschaltete Speicher für chemische Energie beschreiben und "Batterie" als Oberbegriff für wiederaufladbare und nicht wiederaufladbare Speicher verwendet wird. Der Begriff "Akkumulator" stellt somit also eine Untermenge von "Batterie" dar.

Um die erfindungsgemäß erforderliche niedrige elektrische Leitfähigkeit zu erzielen ist es bevorzugt, bei den eingesetzten Komponenten auf Verbindungen in Salzform und leicht dissoziierende Verbindungen, besonders Säuren, zu verzichten. Daher werden die oben beschriebenen weiteren Additive in einer bevorzugten Ausführungsform in unter den Anwendungsbedingungen im wesentlichen nicht-ionischer Form eingesetzt.

Da Glykolether im allgemeinen hygroskopisch sind besteht die Gefahr, daß der Wassergehalt in den erfindungsgemäßen Zusammensetzungen bei Lagerung, besonders bei offener Lagerung, oder auch bei Gebrauch im Kühlsystem, beispielsweise durch Aufnahme von Luftfeuchtigkeit, im Verlauf der Zeit ansteigt. Dies gilt auch bei Lagerung und Gebrauch in geschlossenen Systemen, da viele Dichtungen durchlässig für Luft und Luftfeuchtigkeit sind.

Es stellt einen Vorteil der erfindungsgemäßen Zusammensetzungen dar, daß sie auch bei Aufnahme bzw. Zugabe von Wasser bis zu 5, bevorzugt bis zu 10, besonders bevorzugt bis zu 25 Gew%, ganz besonders bevorzugt bis zu 40 und insbesondere bis zu 50 Gew%, bezogen auf die gesamte Mischung eine elektrische Leitfähigkeit bei 25 °C von nicht mehr als 50 µS/cm, bevorzugt nicht mehr als 25, besonders bevorzugt nicht mehr als 15 µS/cm und ganz besonders bevorzugt nicht mehr als 10 µS/cm aufweisen.

Es stellt einen weiteren Vorteil der erfindungsgemäßen Zusammensetzungen dar, daß sie mit den wichtigsten üblicherweise eingesetzten Dichtungsmaterialien verträglich sind. Dies gilt beispielsweise für EPDM (Ethylen-Propylen-Dien-(Monomer)-Kautschuke, bevorzugt nach EN 13956), SBR (Styrol-Butadien-Kautschuke), FKM (Fluorkarbon-Kautschuke, bevorzugt nach DIN ISO 1629 oder ASTM D 1418, wie z.B. Viton^{®}), NBR (Acrylnitril Butadien Kautschuke) und HNBR (hydrierte Acrylnitril Butadien Kautschuke).

Es stellt einen Vorteil der erfindungsgemäßen Zusammensetzungen dar, daß aufgrund ihrer Stabilität gegen thermische Belastung und Oxidation eine anfänglich niedrige elektrische Leitfähigkeit auch längerfristig beibehalten wird, da die Bildung von elektrisch leitfähigen Produkten infolge Zersetzung oder Oxidation verringert ist.

Daher stellt es eine besondere bevorzugte Ausführungsform der vorliegenden Erfindung dar, die erfindungsgemäßen Zusammensetzungen mit bis zu 40 und sogar bis zu 50 Gew% ionenfreiem, bevorzugt entsalztem oder bidestilliertem Wasser, bezogen auf die gesamte wäßrige Mischung, zu verdünnen und in dieser Form als Kühl- und Gefrierschutzmittel für Brennstoffzellen einzusetzen, da auch diese wäßrigen Kühl- und Gefrierschutzmittel eine ausreichend niedrige Leitfähigkeit für diese spezielle Anwendung aufweisen.

"Ionenfreies Wasser" bezeichnet dabei Wasser mit neutralem pH-Wert in dem im wesentlichen keine anderen Ionen als Hydroxid- und Oxoniumionen aus der Autoprotolyse des Wassers vorliegen. Die elektrische Leitfähigkeit solchen Wassers bei 25 °C liegt bevorzugt bei nicht mehr als 5 µS/cm, besonders bevorzugt bei nicht mehr als 3, ganz besonders bevorzugt bei nicht mehr als 2 und insbesondere bei nicht mehr als 1 µS/cm.

Die erfindungsgemäßen Zusammensetzungen weisen bevorzugt einen Siedepunkt bei 1013 hPa (Normaldruck) von mindestens 200 °C, bevorzugt mindestens 210, besonders bevorzugt mindestens 220, ganz besonders bevorzugt mindestens 230 und insbesondere mindestens 250 °C auf.

Dies bewirkt, daß die Zusammensetzungen auch bei hohen Umgebungstemperaturen noch flüssig sind und als Wärmeträger fungieren können, ohne daß der Dampfdruck über den Zusammensetzungen zu stark erhöht wird. Somit können die erfindungsgemäßen Zusammensetzungen auch bei hohen Temperaturen in offenen Systemen gehandhabt werden.

Wie oben ausgeführt besitzen die erfindungsgemäßen Zusammensetzungen eine vorteilhafte Viskosität auf, die nicht zu niedrig und nicht zu hoch ist.

Bevorzugt weisen sie eine kinematische Viskosität bei 100 °C gemäß ASTM D445 von höchstens 4 mm²/s auf, besonders bevorzugt von höchstens 3 und ganz besonders bevorzugt von höchstens 2 mm²/s auf.

Weiterhin zeigen sie bevorzugt eine kinematische Viskosität bei minus 40 °C gemäß ASTM D445 von nicht mehr als 600 mm²/s, besonders bevorzugt von nicht mehr als 500, ganz besonders bevorzugt von nicht mehr als 400 und insbesondere nicht mehr als 350 mm²/s.

Es stellt einen Vorteil der erfindungsgemäßen Zusammensetzungen dar, daß sie über einen weiten Temperaturbereich, bevorzugt von minus 40 °C bis plus 100 °C, einerseits eine niedrigere Viskosität und andererseits eine geringere Änderung der Viskosität zeigen also konventionelle Kühlmittel auf Basis von Wasser und Monoethylenglykol:
So wird ein Gemisch von 50 Gew% Wasser und 50 Gew% Monoethylenglykol bereits bei etwa minus 37 °C fest, ist also nicht in dem oben genannten bevorzugten Temperaturbereich einsetzbar. Die kinematische Viskosität eines solchen Gemisches beträgt bei minus 20 °C etwa 300 mm²/s.

Es stellt einen Vorteil der vorliegenden Erfindung dar, daß typische Mischungen gemäß der vorliegenden Erfindung bei minus 40 °C nicht fest sind und eine kinematische Viskosität bei minus 40 °C von etwa 250 bis 500 mm²/s sowie bei minus 20 °C von nicht mehr als etwa 100 mm²/s aufweisen.

Die Veränderung der kinematischen Viskosität im Temperaturbereich von minus 40 °C bis plus 100 °C beträgt also bei den erfindungsgemäßen Zusammensetzungen nicht mehr als etwa 500 mm²/s und schwankt somit geringer als die obige Mischung aus Wasser und Monoethylenglykol. Dies hat zur Folge, daß im Kühlsystem Pumpen mit einer geringeren Förderleistung eingesetzt werden können, so daß weniger Energie für die Förderung des Kühlmittels im Kühlsystem aufgewandt werden muß.

### Verfahren

Dadurch, daß die beschriebenen Zusammensetzungen einen höheren Siedepunkt aufweisen als die herkömmlichen Kühlmittel auf Basis Wasser bzw. Monoalkylenglykol ist ein weiterer Gegenstand der vorliegenden Erfindung ein Kühlverfahren für Akkumulatoren, Brennstoffzellen und Batterien von Fahrzeugen, in dem Wärme von einer Wärmequelle bei einer höheren Temperatur über mindestens einen ersten Wärmetauscher auf ein Kühlmittel übertragen wird, dieses Kühlmittel in einem Kühlkreislauf zu mindestens einem zweiten Wärmetauscher geführt wird und dort bei einer niedrigeren Temperatur Wärme vom Kühlmittel abgeführt wird, in dem
- als Kühlmittel eine Zusammensetzung wie oben beschrieben eingesetzt wird,
- die höhere Temperatur von 60 bis 300 °C, bevorzugt 70 bis 280, besonders bevorzugt 80 bis 250 °C beträgt,
- die niedrigere Temperatur von minus 50 bis 100 °C, bevorzugt minus 40 bis 90, besonders bevorzugt minus 30 bis 80 °C beträgt und
- die niedrigere Temperatur mindestens 50 °C niedriger liegt als die höhere Temperatur.

Es stellt eine bevorzugte Ausführungsform dar, daß bei Einsatz der erfindungsgemäßen Zusammensetzungen mit ihrem hohen Siedepunkt der Druck im Kühlkreislauf nicht mehr als 500 hPa, bevorzugt nicht mehr als 400, besonders bevorzugt nicht mehr als 300 und ganz besonders bevorzugt nicht mehr als 200 hPa über dem Umgebungsdruck liegt.

Dabei handelt es sich bei der höheren Temperatur beispielsweise um die Wandtemperaturen von Akkumulatoren, Brennstoffzellen oder Batterien während des üblichen Betriebes von Elektrofahrzeugen mit Brennstoffzellen und/oder Batterien, und/oder Hybridfahrzeugen aus Elektrofahrzeugen mit Brennstoffzellen und/oder Batterien mit Verbrennungsmotoren, oder während des Lade- oder Entladevorganges derartiger Akkumulatoren oder Batterien.

Die niedrigere Temperatur ist dabei bevorzugt die Umgebungstemperatur, mit der das erwärmte Kühlmittel im zweiten Wärmetauscher in Kontakt gebracht wird.

Bei allen Wärmetauschern kann es sich um an sich bekannte Bauteile handeln, die dem Fachmann für diese Zwecke bekannt sind.

Angaben zu Prozent, ppm oder Teilen in dieser Schrift beziehen sich auf Gew%, Gew.ppm oder Gewichtsteile, sofern nicht anders angegeben.

### Beispiele

### Prüfmethoden

Wenn nicht anders angegeben, wurden die in dieser Schrift angegebenen Werte nach folgenden Methoden bestimmt:

| | |
|---|---|
| Siedepunkt | ASTM D 1120 |
| Dichte | ASTM D 1122 |
| elektrische Leitfähigkeit | ASTM D 1125 |
| spezifische Wärmekapazität | DIN EN ISO 11357-4 |
| Wärmeleitfähigkeit | Kugelspaltverfahren |
| Wassergehalt | ASTM D 1123 |
| Flammpunkt | ISO 2719 |
| Zündtemperatur | DIN 51794 |
| Brechungsindex | ASTM D 1218 |
| Reservealkalität | ASTM D 1121 |
| pH | ASTM D 1287 |

### Zusammensetzungen

Es wurden folgende Zusammensetzungen angefertigt (Angaben in Gew%):

### Vergleich:

| Nr | 1 | 2 | 3 | 4 | 5 |
|---|---|---|---|---|---|
| Triethylenglykol monomethylether | 95,50 | 88,50 | 81,50 | 74,50 | 67,50 |
| Tetraethylenglykol monomethylether | 4,50 | 11,50 | 18,50 | 25,50 | 32,50 |
| Summe | 100,00 | 100,00 | 100,00 | 100,00 | 100,00 |
| Viskosität kinematisch, -40 °C, mm²/s (ASTM D 445) | 254,3 | 298,9 | 319,8 | 360 | 393,6 |
| Viskosität kinematisch, -20 °C, mm²/s (ASTM D 445) | 47,7 | 53,5 | 56,6 | 61,4 | 65,8 |
| Viskosität kinematisch, 100 °C, mm²/s (ASTM D 445) | 1,3919 | 1,4208 | 1,4658 | 1,5099 | 1,5621 |

| Nr | 6 | 7 | 8 | 9 | 10 |
|---|---|---|---|---|---|
| Triethylenglykol monomethylether | 93,60 | 86,60 | 79,90 | 72,60 | 65,60 |
| Tetraethylenglykol monomethylether | 2,60 | 9,60 | 16,60 | 23,60 | 30,60 |
| Additivgemisch* | 2,00 | 2,00 | 2,00 | 2,00 | 2,00 |
| Diisopropanolamin | 1,00 | 1,00 | 1,00 | 1,00 | 1,00 |
| Octyldiethanolamin | 0,80 | 0,80 | 0,80 | 0,80 | 0,80 |
| Summe | 100,00 | 100,00 | 100,00 | 100,00 | 100,00 |
| Viskosität kinematisch, -40 °C, mm²/s (ASTM D 445) | 284,4 | 315,3 | 349,9 | 389,2 | 477,6 |
| Viskosität kinematisch, -20 °C, mm²/s (ASTM D 445) | 52,0 | 56,3 | 60,5 | 65,4 | 70,4 |
| Viskosität kinematisch, 100 °C, mm²/s (ASTM D 445) | 1,4934 | 1,8668 | 1,8067 | 1,6869 | 1,6973 |

| Nr | 11 | 12 | 13 |
|---|---|---|---|
| Triethylenglykol monomethylether | 92,20 | 89,20 | 82,20 |
| Tetraethylenglykol monomethylether | 4,00 | 7,00 | 14,00 |
| Additivgemisch* | 2,00 | 2,00 | 2,00 |
| Diisopropanolamin | 0 | 0 | 0 |
| Octyldiethanolamin | 1,8 | 1,8 | 1,8 |
| Summe | 100,00 | 100,00 | 100,00 |
| Viskosität kinematisch, -40 °C, mm²/s (ASTM D 445) | 262,4 | 273,91 | 306,27 |
| Viskosität kinematisch, -20 °C, mm²/s (ASTM D 445) | 49,2 | 50,861 | 55,128 |
| Viskosität kinematisch, 100 °C, mm²/s (ASTM D 445) | 1,4224 | 1,4458 | 1,4895 |

| | | | |
|---|---|---|---|
| * Die eingesetzten 2 Teile Additivgemisch setzten sich zusammen aus Buntmetallkorrosionsinhibitor Tolyltriazol, Antioxidans und Fettalkoholethoxylaten als Korrosionsinhibitor gelöst in 1,67 Teilen Triethylenglykol monomethylether. | | | |

Im Korrosionstest ergaben sich folgende Werte für die Reservealkalität vor/nach Korrosion (gemessen in mL 0,1 M HCl/10 mL Testvolumen), pH-Wert vor/nach Korrosion und den Korrosionsabtrag in mg/cm² über 336h gemäß ASTM D1384:

| Nr | 1 (Vgl) | 2 (Vgl) | 3 (Vgl) | 4 (Vgl) | 5 (Vgl) |
|---|---|---|---|---|---|
| Reservealkalität vor Korrosion | 0 | 0 | 0 | 0 | 0 |
| Reservealkalität nach Korrosion | 0 | 0 | 0 | 0 | 0 |
| pH vor Korrosion | 5,84 | 6,04 | 6,18 | 6,1 | 6,08 |
| pH nach Korrosion | 2,58 | 2,67 | 2,68 | 3,07 | 3,3 |
| Al | 0,05 | 0,22 | 0,31 | 0,12 | 0,38 |
| Cu | -0,16 | -0,26 | -0,28 | -0,3 | -0,18 |
| Messing | -0,17 | -0,3 | -0,23 | -0,29 | -0,19 |
| Stahl | -3,66 | -3,25 | -2,27 | -1,45 | -0,99 |
| Grauguss | -2,54 | -2,51 | -2,17 | -1,69 | -1,24 |
| Weichlot | -1,87 | -1,36 | -1,38 | -0,94 | -1,02 |

| Nr | 6 | 7 | 8 | 9 | 10 |
|---|---|---|---|---|---|
| Reservealkalität vor Korrosion | 10,8 | 10,78 | 10,82 | 10,85 | 10,75 |
| Reservealkalität nach Korrosion | 8,63 | 8,56 | 8,91 | 8,79 | 8,77 |
| pH vor Korrosion | 9,5 | 9,6 | 9,7 | 9,8 | 9,9 |
| pH nach Korrosion | 9,9 | 9,3 | 9,9 | 9,9 | 10,0 |
| Al | 0,04 | 0,1 | 0,06 | 0,06 | 0,05 |
| Cu | -0,43 | -0,41 | -0,42 | -0,43 | -0,44 |
| Messing | 0,07 | 0,07 | 0,07 | 0,08 | 0,08 |
| Stahl | 0,04 | 0,03 | 0,03 | 0,02 | 0,04 |
| Grauguss | 0,09 | 0,11 | 0,11 | 0,07 | 0,14 |
| Weichlot | -0,07 | -0,06 | -0,06 | -0,05 | -0,05 |

| Nr | 11 | 12 | 13 |
|---|---|---|---|
| Reservealkalität vor Korrosion | 7,76 | 7,98 | 8,03 |
| Reservealkalität nach Korrosion | 6,76 | 6,25 | 6,42 |
| pH vor Korrosion | 9,4 | 9,64 | 9,68 |
| pH nach Korrosion | 9,4 | 9,45 | 9,47 |
| Al | 0,05 | 0,05 | 0,1 |
| Cu | -0,03 | -0,02 | -0,02 |
| Messing | 0,06 | 0,06 | 0,07 |
| Stahl | 0,02 | 0,03 | 0,03 |
| Grauguss | 0,13 | 0,1 | 0,08 |
| Weichlot | -0,17 | -0,18 | -0,14 |

In der überstehenden Flüssigkeit aus dem Korrosionstest nach ASTM D1384 wurden folgende Gehalte an Metallen über ICP Spektrometrie (inductively coupled plasma) bestimmt [ppm]:

| Nr | 1 (Vgl) | 2 (Vgl) | 3 (Vgl) | 4 (Vgl) | 5 (Vgl) |
|---|---|---|---|---|---|
| Fe | 18 | 16 | 8 | 28 | 31 |
| Cu | 9 | 7 | 5 | 6 | 9 |
| Al | <3 | <3 | <3 | <3 | <3 |
| Zn | 5 | 3 | <3 | 3 | 4 |
| Sn | 6 | 6 | 3 | 5 | 6 |
| Pb | 13 | 7 | 8 | 5 | 8 |

| Nr | 6 | 7 | 8 | 9 | 10 |
|---|---|---|---|---|---|
| Fe | <3 | <3 | <3 | <3 | <3 |
| Cu | 18 | 18 | 18 | 18 | 19 |
| Al | <3 | <3 | <3 | <3 | <3 |
| Zn | <3 | <3 | <3 | <3 | <3 |
| Sn | <3 | <3 | <3 | <3 | <3 |
| Pb | <3 | <3 | <3 | <3 | <3 |

| Nr | 11 | 12 | 13 |
|---|---|---|---|
| Fe | <3 | <3 | <3 |
| Cu | 3 | <3 | 3 |
| Al | <3 | <3 | <3 |
| Zn | <3 | <3 | <3 |
| Sn | <3 | <3 | <3 |
| Pb | <3 | <3 | <3 |

Man sieht, daß in den Zusammensetzungen gemäß der vorliegenden Erfindung die Einbringung besonders von Eisenionen aber auch von Kupferionen in die Flüssigkeit deutlich verringert wird. Somit ist es möglich die elektrische Leitfähigkeit der erfindungsgemäßen Zusammensetzungen niedrig zu halten. Ferner wird der pH-Wert über die Korrosion stabil gehalten und zeigt nur eine schwache Veränderung

Dies zeigt sich an den folgenden gemessenen elektrischen Leitfähigkeiten (bei 25 °C in µS/cm) vor bzw. nach Korrosion:

| | 1 (Vgl) | 6 | 7 | 8 | 9 | 10 | 11 | 12 | 13 |
|---|---|---|---|---|---|---|---|---|---|
| vor Korrosion | 0 | 1,2 | 1,1 | 1 | 0,9 | 0,9 | 1,1 | 0,8 | 0,7 |
| nach Korr | 0,3 | 1,6 | 1,4 | 1,3 | 1,2 | 1,3 | 1,3 | 1,5 | 1,3 |

Man sieht, daß in der Vergleichszusammensetzung ein stärkerer relativer Anstieg der elektrischen Leitfähigkeit erfolgt als in den erfindungsgemäßen Zusammensetzungen.

Korrosionstest gemäß ASTM D1384 und Korrosionsabtrag in mg/cm² über 4 Wochen:

| Nr | 14 | 15 | 16 | 17 | 18 | 19 | 20**** (Vgl.) |
|---|---|---|---|---|---|---|---|
| Triethylenglykol monomethylether | 90 | 86,2 | 86,2 | 88,2 | 89,95 | 86,2 | |
| Tetraethylenglykol monomethylether | 10 | 10 | 10 | 10 | 10 | 10 | |
| Octyldiethanolamin | | 1,8 | 1,8 | 1,8 | | 1,8 | |
| Additivgemisch: | | | | | | | |
| Tolyltriazol* | | 0,05 | 0,05 | | 0,05 | | |
| Antioxidans** | | 0,03 | | | | 0,03 | |
| Emulgatoren*** | | 0,25 | 0,25 | | | 0,25 | |
| Triethylenglykol monomethylether | | 1,67 | 1,7 | | | 1,72 | |
| Entschäumer | 0,001 | 0,001 | 0,001 | 0,001 | 0,001 | 0,001 | |
| Summe | 100 | 100 | 100 | 100 | 100 | 100 | |

Die im Addititivgemisch eingesetzten Komponenten haben folgende Wirkung:
* Tolyltriazol als Inhibitor gegen Buntmetallkorrosion
** Antioxidans zur Verhinderung/Verminderung der Oxidation der Alkylenglykolether
*** Gemisch aus Fettalkoholethoxylaten
**** Kühlmittelzusammensetzung auf Basis Monoethylenglykol/Wasser (60/40 w/w) gemäß EP 1399523 B1, Beispiel 5 Zum Vergleich.

| Nr | 14 | 15 | 16 | 17 | 18 | 19 | 20 (Vgl.) |
|---|---|---|---|---|---|---|---|
| Abtrag | mg/cm² | mg/cm² | mg/cm² | mg/cm² | mg/cm² | mg/cm² | mg/c m² |
| Cu | -0,69 | -0,17 | -0,18 | -0,80 | -0,59 | -0,30 | -0,07 |
| Weichlot | -2,58 | -0,17 | -0,21 | -0,23 | -2,23 | -0,26 | -1,70 |
| Messing | -0,83 | -0,03 | -0,05 | -0,13 | -0,77 | -0,01 | -0,13 |
| Stahl | -6,11 | 0,00 | -0,01 | -0,01 | 14,39 | 0,00 | -37,65 |
| Grauguss | -5,80 | 0,07 | 0,08 | 0,09 | -3,70 | 0,12 | -48,79 |
| Al | -1,72 | 0,05 | 0,03 | 0,57 | -0,46 | 0,05 | -0,03 |

Aus der obigen Tabelle ergibt sich, daß das erfindungsgemäß besonders bevorzugte N-Octyldiethanolamin besondere Vorteile als Inhibitor der Korrosion von Eisenwerkstoffen, besonders Stahl und Grauguß, zeigt.

Es weist ferner auch eine Wirkung als Buntmetallkorrosionsinhibitor auf und kann als dieser das herkömmlich eingesetzte Tolyltriazol teilweise ersetzen.

Korrosionstest der Zusammensetzung Nummer 15 analog ASTM D1384 mit folgenden Abwandlungen: Es wurde destilliertes Wasser eingesetzt und auf 50 Gew% wäßrige Lösung aufgefüllt und lediglich drei Metalle (Messing, Stahl und Aluminium) eingesetzt, die für Brennstoffzellen als repräsentativ erachtet werden. Die Ergebnisse des Korrosionstests wurden nach 4 bzw. 7 Tagen ermittelt.

| Nr | 15 | 15 |
|---|---|---|
| Tage | 4 | 7 |
| Abtrag | mg/cm² | mg/cm² |
| Messing | 0,01 | -0,07 |
| Stahl | 0,00 | -0,01 |
| Al | 0,10 | 0,09 |

Entwicklung der elektrischen Leitfähigkeit bei verschiedenen Temperaturen und Zumischung von bidestilliertem Wasser mit einer Leitfähigkeit von 0,8 µS/cm bei 25 °C bzw. 1,5 µS/cm bei 60 °C.

| Gew% Zusammensetzung Bsp 15 | Gew% Wasser | Leitfähigkeit µS/cm bei 25 °C | Leitfähigkeit µS/cm bei 60 °C |
|---|---|---|---|
| 100 | 0 | 0,8 | 1,3 |
| 99 | 1 | 1,0 | 1,9 |
| 98 | 2 | 1,2 | 2,4 |
| 97 | 3 | 1,5 | 3,0 |
| 96 | 4 | 1,7 | 3,7 |
| 95 | 5 | 2,0 | 4,4 |
| 90 | 10 | 3,4 | 9,0 |
| 80 | 20 | 7,5 | 22,4 |
| 70 | 30 | 13,7 | 38,0 |
| 60 | 40 | 19,2 | 50,4 |
| 50 | 50 | 24,7 | 63,2 |

Man sieht, daß die gemessene erfindungsgemäße Zusammensetzung aus Beispiel 15 selbst bei einer 1:1 Verdünnung mit bidestilliertem Wasser bei 25 °C noch unter der kritischen Leitfähigkeit von 25 µS/cm bleibt und bei Zumischung von 20 Gew% bidestilliertem Wasser unter einer kritischen Leitfähigkeit von 10 µS/cm.

## Patentansprüche

1. Verwendung einer Zusammensetzung, enthaltend
(A) mindestens ein Alkylenglykolderivat der Formel (I) 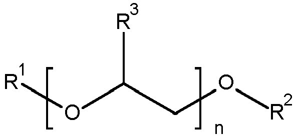 worin
R¹ Wasserstoff oder C₁- bis C₄-Alkyl, bevorzugt Wasserstoff, Methyl oder Ethyl, besonders bevorzugt Wasserstoff oder Methyl und ganz besonders bevorzugt Wasserstoff,
R² C₁- bis C₄-Alkyl, bevorzugt Methyl, Ethyl oder n-Butyl, besonders bevorzugt Methyl oder n-Butyl und ganz besonders bevorzugt Methyl
R³ Wasserstoff oder Methyl, bevorzugt Wasserstoff und
n im arithmetischen Mittel eine Zahl von 3,0 bis 4,0
bedeuten,
und
(B) mindestens einen Korrosionsinhibitor, ausgewählt aus der Gruppe bestehend aus
(Ba) ortho-Kieselsäureestern und/oder Alkoxyalkylsilanen
(Bb) Azolderivaten
(Bc) Verbindungen der allgemeinen Formel (II) 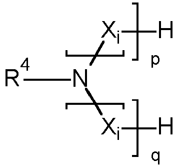
worin
R⁴ einen organischen Rest mit 6 bis 10 Kohlenstoffatomen, insbesondere einen geradkettigen oder verzweigten, bevorzugt geradkettigen Alkyl- oder Alkenylrest mit 6 bis 10 Kohlenstoffatomen, bevorzugt 7 bis 9 und besonders bevorzugt 8 Kohlenstoffatomen,
p und q unabhängig voneinander eine positive ganze Zahl von 1 bis 30, bevorzugt 1 bis 20, besonders bevorzugt 1 bis 10, ganz besonders bevorzugt 1 bis 5 und insbesondere 1 bis 3, speziell 1 oder 2 und
jedes Xᵢ für i = 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
bedeuten,
mit der Maßgabe, daß die Zusammensetzung
- einen Anteil an Alkylenglykolderivaten der Formel (I) mit n ≤ 2 von nicht mehr als 10 Gew% enthält, bevorzugt nicht mehr als 8, besonders bevorzugt nicht mehr als 6, ganz besonders bevorzugt nicht mehr als 5, insbesondere nicht mehr als 4 und speziell nicht mehr als 3 Gew%,
- einen Anteil an Alkylenglykolderivaten der Formel (I) mit n ≥ 5 von nicht mehr als 5 Gew% enthält, bevorzugt nicht mehr als 4, besonders bevorzugt nicht mehr als 3, ganz besonders bevorzugt nicht mehr als 2,5 und speziell nicht mehr als 2 Gew%,
- einen Anteil an Monoethylenglykol, Diethylenglykol, Monopropylenglykol, Dipropylenglykol, 1,3-Propylenglykol und Glycerin von jeweils nicht mehr als 10 Gew% enthält, bevorzugt nicht mehr als 8, besonders bevorzugt nicht mehr als 6, ganz besonders bevorzugt nicht mehr als 5 und speziell nicht mehr als 3 Gew%
enthaltend bis zu 40, bevorzugt bis zu 50 Gew% ionenfreies Wasser, bezogen auf die gesamte wäßrige Mischung, als Kühlmittel und Gefrierschutzmittel für Brennstoffzellen.

2. Verwendung gemäß Anspruch 1, **dadurch gekennzeichnet, daß** die wäßrige Mischung eine elektrische Leitfähigkeit bei 25 °C von nicht mehr als 50 µS/cm, bevorzugt nicht mehr als 25, besonders bevorzugt nicht mehr als 15 µS/cm und ganz besonders bevorzugt nicht mehr als 10 µS/cm aufweist.

3. Verwendung gemäß Anspruch 1 oder 2, **dadurch gekennzeichnet, dass** das ionenfreie Wasser eine elektrische Leitfähigkeit bei 25 °C von nicht mehr als 5 µS/cm, besonders bevorzugt bei nicht mehr als 3, ganz besonders bevorzugt bei nicht mehr als 2 und insbesondere bei nicht mehr als 1 µS/cm aufweist.

4. Verwendung gemäß einem der vorstehenden Ansprüche, **dadurch gekennzeichnet, dass** es sich bei dem ionenfreien Wasser um entsalztes oder bidestilliertes Wasser handelt.

5. Verwendung gemäß einem der vorstehenden Ansprüche, **dadurch gekennzeichnet, daß** das Strukturelement R³-N< abgeleitet ist von Aminen, ausgewählt ist aus der Gruppe bestehend aus n-Hexylamin, 2-Methylpentylamin, n-Heptylamin, 2-Heptylamin, iso-Heptylamin, 1-Methylhexylamin, n-Octylamin, 2-Ethylhexylamin, 2-Aminooctan, 6-Methyl-2-heptylamin, n-Nonylamin, iso-Nonylamin, n-Decylamin und 2-Propylheptylamin oder deren Gemische.

6. Verwendung gemäß einem der Ansprüche 1 bis 4, **dadurch gekennzeichnet, daß** das Azolderivat ausgewählt ist aus der Gruppe bestehend aus Benzimidazol, Benzotriazol, Tolutriazol und/oder hydriertem Tolutriazol.

7. Verwendung gemäß einem der vorstehenden Ansprüche, **dadurch gekennzeichnet, dass** das Verhältnis der Komponenten (A) zu (B)
95 bis 99,9 Gew% Komponente (A) zu
0,1 bis 5 Gew% Komponente (B)
beträgt.

8. Verwendung gemäß einem der vorstehenden Ansprüche, **dadurch gekennzeichnet, daß** das Verhältnis der Alkylenglykolderivate der Formel (I) mit n = 3 zu denen mit n = 4 von 100 : 0 bis 40 : 60 beträgt.

9. Verwendung gemäß einem der vorstehenden Ansprüche, bestehend aus Komponente (A), Komponente (B), Wasser, optional mindestens einem weiteren Korrosionsinhibitor (C), der ein anderer als die Komponente (B) ist, sowie optional mindestens eine weitere Verbindung ausgewählt aus der Gruppe bestehend aus Bitterstoffen, Farbstoffen, Entschäumern und Antioxidantien.

10. Kühlverfahren, in dem Wärme von einer Wärmequelle bei einer höheren Temperatur über mindestens einen ersten Wärmetauscher auf ein Kühlmittel übertragen wird, dieses Kühlmittel in einem Kühlkreislauf zu mindestens einem zweiten Wärmetauscher geführt wird und dort bei einer niedrigeren Temperatur Wärme vom Kühlmittel abgeführt wird, **dadurch gekennzeichnet, daß**
- als Kühlmittel eine Zusammensetzung gemäß einem der vorstehenden Ansprüche eingesetzt wird,
- die höhere Temperatur von 60 bis 300 °C beträgt,
- die niedrigere Temperatur von minus 50 bis 100 °C beträgt,
- die niedrigere Temperatur mindestens 50 °C niedriger liegt als die höhere Temperatur.
